# EUROPEAN PATENT SPECIFICATION

(11) **EP 3 001 385 B1**
(45) Date of publication and mention of the grant of the patent: **01.05.2019**
(21) Application number: 14186795.2
(22) Date of filing: 29.09.2014
(51) Int. Cl.: G06T 15/00, G06T 15/08

(54) **A system and method for rendering a video stream**
System und Verfahren zur Wiedergabe eines Videostroms
Système et procédé de rendu d'un flux vidéo

(43) Date of publication of application: 30.03.2016
(73) Proprietor: Agfa Healthcare, 2640 Mortsel (BE)
(72) Inventor: Ovtchinnikov, Alexandre, 2640 Mortsel (BE)
(74) Representative: Verbrugghe, Anne Marie L.

(56) References cited:
- EP-A1- 2 098 994
- US-A1- 2009 189 890
- Kyungmin Lee, David Chu, Eduardo Cuervo, Johannes Kopf, Sergey Grizan, Alec Wolman, Jason Flinn: "Outatime: Using Speculation to Enable Low-Latency Continuous Interactionfor Cloud Gaming", , 21 August 2014 (2014-08-21), pages 1-14, XP002740655, Retrieved from the Internet: URL:http://research.microsoft.com/pubs/226 843/outatime_techreport2014.pdf [retrieved on 2015-06-09]

## Description

### Field of the Invention

The present invention relates to the field of post-processing and rendering medical images for 3-D presentation of volumetric information, and more particularly to the field of post-processing and rendering e.g. stereoscopic 3-D.

### Background of the Invention

The majority of the studies performed in radiology are presented as 2-D information, i.e. stacks of 2-D slices through which a radiologist scrolls to access image content along for example a vessel or a spine of a patient. The axial plane of a body passes through the body from anterior to posterior and divides it into superior and inferior sections. The coronal plane passes through the body from left to right and divides it into anterior and posterior sections. The sagittal plane passes through the body from anterior to posterior and divides it into left and right sections. The oblique plane of a body passes through the body at an angle to the axial, coronal and sagittal planes. The radiologist can reconstruct a 3-D visualization of a specific part of the body of a patient in 3-D, along an orthogonal or an oblique plane, or even along a curved line, with Multi-Planar Reconstruction rendering or with 3-D rendering. A real-time experience for the user depends on the connection speed, i.e. how many images can be transferred from the server to the client side, and the latency, which is the server time from the instruction to the response, i.e. how long the server takes to answer a request.

The CPU time, also referred to as the Central Processing Unit time, needed for 3-D rendering depends for example on the original quality of the images, on the transparency of the part of the body, on the resolution. The typical CPU time to render a true 3-D image is comprised between 300ms and more than 1s. To speed up the rendering, a GPU-based card, also referred to as the Graphics Processing Unit-based card, can be implemented on the server side. The costs of the acquisition of such a GPU-based card, as well as the costs associated with its implementation, such as specific servers and logistics, are high. The memory on the GPU-based card is limited, which limits the amount of volumes that can be processed simultaneously. The allowed number of users of a single GPU-based card is therefore limited.

A radiologist usually has access to suitable hardware, e.g. a workstation, a powerful CPU and/or GPU, and enough memory to perform the reconstruction. Other clinicians, such as for example an orthopaedic surgeon, a paediatrician, a plastic surgeon, a cardiologist, can be interested in the 3-D reconstruction of a specific part of the body of a patient, but only have access to a more limited client application often running on a general purpose personal computer. In such a case, the memory size at the client side is often limited and the rendering requires all the images to be stored monolithically. The time needed to download all the data at the side of the client increases and the data transfer of all the images to the side of the client threatens to saturate the network of a hospital. The client can rely on a mobile network to access the 3-D reconstruction while the mobile network demonstrates a low bandwidth. This jeopardizes the real-time experience of the client by increasing the time needed to download the images. Therefore, all the acquired images are stored on a server, and a browser-based portal is implemented to be used by all the clinicians.

Multi-Planar Reconstruction, also referred to as MPR, uses 3-D data to show other planes that are not acquired directly during the acquisition of the images, including sagittal and coronal cross-sections reconstructed from the axial images. Since the entire volume data is available, it is possible to achieve any required plane, and it is possible to obtain a curved plane, parallel to any anatomical structure. First, a 3-D volume is built by stacking axial slices. The slices are then cut through the volume in a different plane, for example usually the orthogonal plane. It is also possible to use a special projection method, such as maximum-intensity projection or minimum-intensity projection, to build the reconstructed slices. MPR is the most spread diagnosis tool. Axial images through the spine will only show one vertebral body at a time and the client must therefore extrapolate and interpret the images to get an idea of what could be visible along a line of these images. This relies on suppositions of the clients, and therefore threatens the relevance of the diagnosis. By reformatting the volume, it becomes much easier to visualize the position of one vertebral body in relation to the others. It is also possible to reconstruct in non-orthogonal, i.e. oblique, planes so that the optimal plane can be chosen to display an anatomical structure. This may be particularly useful for visualizing the structure of the bronchi as these do not lie orthogonal to the direction of the scan. For vascular imaging, curved-plane reconstruction can be performed. This allows bends in a vessel to be straightened so that the entire length can be visualized in one image, or a short series of images. Once a vessel has been straightened in this way, quantitative measurements of length and cross sectional area can be made, so that surgery or interventional treatment can be planned. The CPU time needed for MPR rendering depends on the resolution of the original images, and on the thickness of the slide to be reconstructed. The typical CPU to render a MPR image is in the range of 10 to 15 ms.

The patent application EP2098994 describes a method of server site rendering 3-D images on a server computer coupled to a client computer, wherein the client computer instructs a server computer to load data for 3-D rendering and sends a stream of rendering parameters sets to the server computer, each set of rendering parameters corresponding to an image to be rendered. The render computer renders a stream of images corresponding to the stream of parameter sets and the stream of images is compressed with a video compression scheme. The compressed video is sent from the server computer to the client computer where the client computer decompresses the received compressed video stream and displays the result in a viewing port. All the requests of the client computer are sent to the server computer. There exists a risk for the server computer to be overloaded with requests if the processing of the images is not performed fast enough to keep up with the rate of incoming requests. An overload of the server computer increases the time delay between the moment a client computer sends a request for an image and the moment the corresponding rendered image is displayed. This delay spoils the real-time viewing experience of display of rendered images at the side of the client computer. This would lead to a need to increase the processing power required by the server computer to handle the incoming requests and increase the costs associated with the implementation of the system performing the method described in EP2098994. Additionally, the method described in EP2098994 comprises a compression step of the video stream by the server computer and a decompression step of the video stream by the client computer. The compression and decompression steps can drastically increase the processing time associated with the video stream. This increases the delay between the moment the client computer sends a request and the moment the video stream is displayed, and therefore jeopardizes the real-time viewing experience of a user. Also, the implementation of the compression and decompression steps increases the processing power required for the rendering of the video stream, and therefore increases the costs associated with the method. Additionally, the decompression parameters used by the client computer are independent from the compression parameters of the server computer. The decompression of the video stream can therefore result in a lower quality video stream than the quality of the video stream rendered by the server computer. The lowered quality of the video stream being displayed at the client computer increases the risk of performing a wrong diagnosis, which endangers the health of a patient under study.

It is an objective of the present invention to disclose a system and the related method that overcome the above identified shortcomings of existing solutions. More particularly, it is an objective to disclose such a system and method for rendering medical images for 3-D presentation of volumetric information, where the real-time viewing experience of a user of the system is improved, with a reduced need for processing power and with a simpler architecture lowering the load on the network and the processor. It is a further objective to disclose such a system that streams video for 3-D presentation of volumetric information in a fast and efficient manner, and with reduced implementation and exploitation

### Summary of the Invention

The invention is defined by the appended claims. According to a first aspect of the present invention, the above defined objectives are realized by a system according to claim 1 for navigating a sequence of rendered medical images.

One or more clients send navigation requests for navigating through a sequence of rendered medical images to a workflow server over a network. The workflow server routes the navigation requests to two or more rendering nodes. Two or more rendering nodes retrieve medical images corresponding to the navigation requests from a storage, process the medical images according to the navigation requests and render the sequence of rendered medical images to the workflow server. The workflow server comprises a converting module that converts the sequence of rendered medical images to a video stream according to the navigation requests and sends it to the respective clients for viewing. The workflow server monitors parameters of the rendering nodes to be efficiently able to route the navigation requests to two or more rendering nodes. The workflow server is aware of parameters such as the processing capabilities and of the processing load of each of the two or more rendering nodes, i.e. how fast can a rendering node process requests and how many navigation requests is each rendering node processing at a given moment. The workflow server is therefore able to route the requests to the rendering node which for example demonstrates the highest processing capability and the lowest processing load at the moment the workflow server receives navigation requests from one or more clients. In other words, the workflow server routes navigation requests from one or more clients to the two or more rendering nodes in such a way that the navigation requests will be processed the fastest. The load of navigation requests from the one or more clients is in this way spread over two or more rendering nodes and the required processing load is therefore distributed amongst several rendering nodes that are selected for their available processing power. This way, the delay at which one or more clients send navigation requests and the moment the corresponding video stream converted from a sequence of rendered medical images is displayed is minimized. The reduction of this delay improves the real-time viewing experience of the client. The implementation of a workflow server that distributes the processing load ensures the architecture is simple, and prevents an overload of the rendering nodes and minimizes the processing power required to process the navigation requests of the clients. Also, the workflow server comprises a conversion module adapted to convert a sequence of rendered medical images, generated from medical images according to the navigation requests, to a video stream. The conversion module directly provides the respective client with a video stream in a format suitable for viewing. In other words, the video stream does not require to go through compression and/or decompression steps in order to be viewed by the client. This makes the system simpler and ensures a real-time viewing experience for the client.

One or more clients send navigation requests for navigating the sequence of rendered medical images. The navigation requests may for example be generated by scrolling movements of a mouse of one or more clients. For instance, one client is scrolling with its mouse through a sequence of rendered medical images along an oblique plane with a desired navigation rate. Each scrolling movement of the mouse generates navigation requests for navigating the sequence of rendered medical images. The navigation requests may also be generated when a client clicks and holds its mouse in the clicked position on one rendered medical image of the sequence of rendered medical images, and moves its mouse in order to view the rendered medical image under a different viewing angle. Each movement of the mouse then generates navigation requests. When the respective client releases the mouse, navigation requests are generated in order to view the rendered medical image on which the client stopped moving the mouse. This can for example increase the level of details available to the client and therefore increases the probability to perform a relevant diagnosis.

One or more clients are able to send navigation requests to the workflow server. This allows the storage of medical images on centralized servers. The workflow server receives navigation requests from one or more clients via a network, and receives the sequence of rendered medical images from the rendering nodes which can suitably connect to the centralized servers storing the medical images. This way, the medical images can be monolithically stored on centralized servers which demonstrate enough storage capacity, while the memory at the side of the workflow server and the memory at the side of the clients is not required for storage of unprocessed medical images. Also, it is possible for more than one client to send navigation requests for medical images to the workflow server via the network. Clients can communicate with the workflow server independently from the locations of the clients. The workflow server is also aware of the bandwidth of the network between the clients and the workflow server, and of a latency of the network, i.e. how fast the clients communicate with the workflow server. This way, the workflow server can estimate how many medical images can be provided in the sequence of rendered medical images to be sent via the network to the clients. When the bandwidth of the network decreases, the workflow server stores a sequence of rendered medical images in a lowered format, in order to keep up with the bandwidth. When the bandwidth of the network increases, the workflow server stores a sequence of rendered medical images in an improved format.

According to an optional embodiment, the control interface is configured to display the received video stream using built-in codecs.

This way, the clients do not need to decompress the video stream in order to be able to view it. Each client comprises a control interface adapted to receive a video stream from a workflow server and that uses built-in codecs for streaming the video. The conversion module of the workflow server directly provides the respective client with a video stream in a format suitable for viewing. In other words, the video stream does not require to go through compression and/or decompression stages in order to be viewed by the client. This makes the system simpler and ensures a real-time viewing experience for a user of the system.

According to an optional embodiment:
- the control interface of one or more clients is further configured to receive and display the sequence of rendered medical images; and
- the conversion module is further configured to send a subset of the sequence of rendered medical images, received in response to the routed navigation requests, to the respective client for viewing.

This way, the sequence of rendered medical images is provided by the conversion module of a workflow server to the control interface of each of the respective clients from which the workflow server received navigating requests. The conversion module provides the respective client with a subset of the sequence of rendered medical images corresponding to the navigation requests via a network. The subset of the sequence of rendered medical images can for example be a sequence of one or more rendered medical images.

According to an optional embodiment:
- the navigation requests comprise a request for navigating through the sequence of rendered medical images at a desired navigation rate; and
- the conversion module is further configured to send to the respective client for viewing:
   - the subset of the sequence of rendered medical images when the desired navigation rate does not exceed a predetermined navigation rate threshold.

When a client navigates the sequence of rendered medical images at a desired navigation rate that does not exceed a predetermined navigation rate threshold, the conversion module of the workflow server sends a subset of the sequence of rendered images to the respective client. This way, the client is provided with a rendered medical image on which it stopped navigating, for example to study an overview of the area under study and decide on which section to navigate to next. Additionally, the conversion module can provide the respective client with a subset of rendered medical images that demonstrate a higher quality format, which improves the level of details available to the client and therefore increases the probability to perform a relevant diagnosis.

According to an optional embodiment:
- the conversion module is further configured to send to the respective client for viewing:
   - the video stream when the desired navigation rate exceeds the predetermined desired navigation rate threshold.

When a client navigates the sequence of rendered medical images at a desired navigation rate that does exceed a predetermined navigation rate threshold, the conversion module of the workflow server converts a sequence of rendered medical images to a video stream according to the corresponding navigation requests and sends the video stream to the respective client for viewing. This way, the client is provided with a video stream that it uses for example to view a vessel or an organ of a patient under a different angle, etc. The conversion module can provide the respective client with a video stream that demonstrates a lower quality format, which minimizes the load on the rendering nodes and reduces the delay between the moment a client sends navigation requests and the moment the video stream is displayed. This way, the real-time viewing experience of the client is improved, and the conversion module does not need to constantly provide the client with a video stream, i.e. does not need to constantly convert the sequence of rendered medical images to a video stream. This saves computational power at the side of the workflow server, which reduces the costs associated with the system.

According to an optional embodiment, the predetermined navigation rate threshold is determined in function of a predetermined viewing time threshold for a viewing time, the viewing time being the time period during which each of the rendered medical images of the sequence of rendered medical images needs to be displayed by the client in response to the navigation requests.

The predetermined viewing threshold is calculated as a function of a viewing time, which is the time lapse during which a rendered medical image of the sequence of rendered medical images needs to be displayed by the client in response to the navigation requests. In other words, if for example a client navigates the sequence of rendered medical images faster than the pace at which the client renders the sequence of rendered medical images, then the system provides the client with a video stream. If for example a client navigates the sequence of rendered medical images slower than the pace at which the client renders the sequence of rendered medical images, then the system provides the client with a subset of the sequence of rendered medical images. This way, the real-time viewing experience of the client is ensured.

According to an optional embodiment, the workflow server comprises an image workflow cache adapted to store the sequence of rendered medical images.

This way, the workflow server can temporarily store a sequence of rendered medical images that were processed and rendered by rendering nodes, before providing a subset of the sequence of rendered medical images to a respective client for viewing when the desired navigation rate does not exceed the predetermined desired navigation rate threshold, or before providing a video stream converted from the sequence of rendered medical images to a respective client for viewing when the desired navigation rate does exceed the predetermined desired navigation rate threshold. The rendering nodes process the navigation requests at different rates, depending on their maximum processing capacities and their available processing capacities. This implies that the rendering nodes will render sequences of rendered medical images at different rates. The workflow server centrally stores the received sequences of rendered medical images in the image workflow cache before converting them to a video stream and sending the video stream to the one or more clients that sent the corresponding navigation requests. This improves the real-time viewing experience of a user of the system as it prevents an overload of the video client cache. The workflow server is aware of the fill level of the image workflow cache. The image workflow fill level of the image workflow cache is an indication of how many rendered medical images from a sequence of rendered medical images and/or a future sequence of rendered medical images are stored in the image workflow cache. Sequences of rendered medical images rendered to one or more clients in the form of a subset and/or a video stream remain stored in the image workflow cache. In other words, the workflow server converts the sequences of rendered medical images and/or of the future sequences of rendered medical images to a subset and/or a video stream, and ensures the sequences of rendered medical images and/or the future sequences of rendered medical images remain stored in the image workflow cache. This way, sequences of rendered medical images and future sequences of rendered medical images remain available and can be later retrieved again from the image workflow cache and converted again by the workflow server. For example, when a client is scrolling with a mouse to zoom in, i.e. when a client generates navigation requests for medical images when zooming in, sequences of rendered medical images corresponding to already viewed rendered medical images remain stored in the image workflow cache. This way, a sequence of rendered medical images corresponding to previously viewed rendered medical images can be retrieved again and converted again by the workflow server if the client generates navigations requests to zoom out for example. The probability for a rendered medical image to be erased from the image workflow cache by the workflow server increases with the time delay since the rendered medical image was last viewed. In other words, when the image workflow cache is full with sequence of rendered medical images, the rendered medical images for which the time since the last time they were viewed is the largest are the first ones to be erased from the image workflow cache.

According to an optional embodiment, the workflow server is further adapted to:
- estimate future navigation requests of the one or more clients;
- route the future navigation requests to two or more rendering nodes;
wherein each of the two or more rendering nodes is further adapted to:
- process medical images according to the future navigation requests, thereby generating a future sequence of processed medical images; and
- render the future sequence of processed medical images for viewing by one or more clients, thereby generating a future sequence of rendered medical images; and
wherein the conversion module of the workflow server is further adapted to:
- in response to the routed future navigation requests, receive from the respective rendering node the future sequence of rendered medical images; and
- store the future sequence of rendered medical images in the image workflow cache.

This way, the workflow server makes a prediction of the future navigation requests of the clients from which it already received navigation requests. This prediction is performed before the clients send navigation requests. The workflow server routes the predicted future navigation requests to two or more rendering nodes, and receives future sequences of rendered medical images processed and generated by two or more rendering nodes from medical images and corresponding to the future navigation requests. The future sequences of rendered medical images are then stored in the image workflow cache. When the predicted navigation requests of one or more client are received by the workflow server, i.e. when the workflow server receives navigation requests corresponding to the future navigation requests, the workflow server fetches the corresponding future sequence of rendered medical images from the image workflow cache instead of routing the received navigation requests to two or more rendering nodes. This drastically reduces the delay between the moment a client sends a navigation request and the moment the sequence of rendered medical images and/or the video stream is viewed, and thereby improves the real-time viewing experience of a user of the system.

According to an optional embodiment, the conversion module is further adapted to:
- in response to the navigation requests, retrieve from the image workflow cache the future sequence of rendered medical images;
- convert the future sequence of rendered medical images to the video stream; and
- send the video stream to the respective client for viewing.

When the predicted navigation requests of one or more clients are received by the workflow server, i.e. when the received navigation requests correspond to the future navigation requests, the workflow server fetches the corresponding future sequences of rendered medical images from the image workflow cache and converts the future sequence of rendered medical images to video stream instead of routing the received navigation requests to two or more rendering nodes. This drastically reduces the delay between the moment a client sends a navigation request and the moment the video stream is viewed, and thereby improves the real-time viewing experience of a user of the system.

According to an optional embodiment, the future navigation requests for the future sequence of rendered medical images have a lower priority for the two or more rendering nodes compared to the navigation requests for the sequence of rendered medical images.

This way, future navigation requests for navigating future sequences of rendered medical images are treated by the rendering nodes with a lower priority than the navigation requests for navigating sequences of rendered medical images. In other words, each rendering node will first process navigation requests for navigating a sequence of rendered medical images and then process future navigation requests for future sequences of rendered medical images. This guarantees that the navigation requests for sequences of rendered medical images sent by one or more client are answered as sequence of rendered medical images are provided to the respective one or more clients. This ensures the real-time viewing experience of one or more clients.

According to an optional embodiment, the workflow server is further adapted to monitor one or more of the following:
- a maximum processing capacity of each of the two or more rendering nodes; and
- an available processing capacity of each of the two or more rendering nodes.

This way, the workflow server is able to evaluate to which two or more rendering nodes the navigation requests of one or more clients can be routed. The maximum processing capacity of a rendering node is an indication of the intrinsic speed at which the rendering node can process medical images according to navigation requests. The available processing capacity is an indication of the load of the rendering node, i.e. how many navigation requests are processed by the rendering node at a given moment. This way, the workflow server is provided information about the status of each rendering node, which is an indication at a given moment of how fast each rendering node is going to process navigation requests.

According to an optional embodiment, the workflow server is further adapted to route the navigation requests to one or more of the two or more rendering nodes with highest maximum processing capacity and highest available processing capacity.

The workflow server is aware of the maximum processing capacity of each rendering nodes, and temporarily stores how many navigation requests this workflow server has routed over a recent period of time, for example over the last hour, or the last minute, etc, i.e. is temporarily aware of the available processing capacity of each rendering node. This way, the workflow server can route navigation requests to the two or more rendering nodes which will process the navigation requests the fastest, thereby improving the real-time viewing experience of the user of the system by reducing the delay between the moment requests are sent and the moment the sequence of rendered medical images or the video stream is viewed. This also minimizes the processing load on each of the rendering nodes, as the workflow server distributes the navigation requests of the clients over two or more rendering nodes. This way, the required processing power to process the navigation requests of each client is minimized.

According to an optional embodiment, the future navigation requests for the future sequence of rendered medical images have a lower priority for the rendering nodes compared to the navigation requests for the sequence of rendered medical images.

This way, future navigation requests for a future sequence of rendered medical images are treated by the rendering nodes with a lower priority than the navigation requests for the sequence of rendered medical images. In other words, each rendering node will first process navigation requests for the sequence of rendered medical images and then process future navigation requests for a future sequence of rendered medical images. This guarantees that the navigation requests for the sequence of rendered medical images sent by one or more clients are answered as the sequence of rendered medical images is provided to the corresponding one or more clients. This ensures the real-time viewing experience of one or more clients.

According to a second aspect of the invention, there is provided a method according to claim 13 for navigating a sequence of rendered medical images.

One or more clients send navigation requests for navigating through a sequence of rendered medical images to a workflow server over a network. The workflow server routes the navigation requests to two or more rendering nodes. Two or more rendering nodes retrieve medical images corresponding to the navigation requests from a storage, process the medical images according to the navigation requests and render the sequence of rendered medical images to the workflow server. The workflow server comprises a converting module that converts the sequence of rendered medical images to a video stream according to the navigation requests and sends it to the respective clients for viewing. The workflow server monitors parameters of the rendering nodes to be efficiently able to route the navigation requests to two or more rendering nodes. The workflow server is aware of parameters such as the processing capabilities and of the processing load of each of the two or more rendering nodes, i.e. how fast can a rendering node process requests and how many navigation requests is each rendering node processing at a given moment. The workflow server is therefore able to route the requests to the rendering node which for example demonstrates the highest processing capability and the lowest processing load at the moment the workflow server receives navigation requests from one or more clients. In other words, the workflow server routes navigation requests from one or more clients to the two or more rendering nodes in such a way that the navigation requests will be processed the fastest. The load of navigation requests from the one or more clients is in this way spread over two or more rendering nodes and the required processing load is therefore distributed amongst several rendering nodes that are selected for their available processing power. This way, the delay at which one or more clients send navigation requests and the moment the corresponding video stream converted from a sequence of rendered medical images is displayed is minimized. The reduction of this delay improves the real-time viewing experience of a user of the system. The implementation of a workflow server that distributes the processing load ensures the architecture is simple, and prevents an overload of the rendering nodes and minimizes the processing power required to process the navigation requests of the clients. Also, the workflow server comprises a conversion module adapted to convert a sequence of rendered medical images, generated from medical images according to the navigation requests, to a video stream. The conversion module directly provides the respective client with a video stream in a format suitable for viewing. In other words, the video stream does not require to go through compression and/or decompression steps in order to be viewed by the client. This makes the implementation of the method simpler and ensures a real-time viewing experience for a user of the system.

One or more clients send navigation requests for navigating the sequence of rendered medical images. The navigation requests may for example be generated by scrolling movements of a mouse of one or more clients. For instance, one client is scrolling with its mouse through a sequence of rendered medical images along an oblique plane with a desired navigation rate. Each scrolling movement of the mouse generates navigation requests for navigating the sequence of rendered medical images. The navigation requests may also be generated when a client clicks and holds its mouse in the clicked position on one rendered medical image of the sequence of rendered medical images, and moves its mouse in order to view the rendered medical image under a different viewing angle. Each movement of the mouse then generates navigation requests. When the respective client releases the mouse, navigation requests are generated in order to view the rendered medical image on which the client stopped moving the mouse. This can for example improve the level of details available to the client and therefore increases the probability to perform a relevant diagnosis.

The current invention in addition also relates to a computer program comprising software code adapted to perform the method according to the present invention.

The invention further relates to a computer readable storage medium comprising the computer program according to the present invention.

### Brief Description of the Drawings

Fig. 1 schematically illustrates an embodiment of a system for rendering a video stream.
Fig. 2 schematically illustrates an embodiment of a system for rendering a video stream facing a situation of extremely high load or catastrophic failure of one workflow server.
Fig. 3 schematically illustrates the embodiment of the system of Figure 2, where the system sends a subset of the sequence of rendered medical images to the client for viewing.
Fig. 4 schematically illustrates an embodiment of a system where the workflow server stores sequences of rendered medical images and/or future sequences of rendered medical images in an image workflow cache.
Fig. 5 schematically illustrates a suitable computing system for hosting the system of Figure 4.

### Detailed Description of Embodiment(s)

Digital Imaging and Communications in Medicine, also referred to as DICOM, is a standard for handling, storing, printing, and transmitting information in medical imaging. It includes a file format definition and a network communications protocol. The communication protocol is an application protocol that uses TCP/IP to communicate between systems. DICOM files can be exchanged between two entities that are capable of receiving image and patient data in DICOM format. DICOM enables the integration of for example scanners, servers, workstations, printers, and network hardware from multiple manufacturers into a Picture Archiving and Communication System, also referred to as PACS. The different devices come with DICOM conformance statements which clearly state which DICOM classes they support. DICOM has been widely adopted by hospitals and is making inroads in smaller applications of clinicians' offices, such as dentists' and doctors' offices. When a medical information system wishes to connect to the repository and fetch stored DICOM objects, it must be familiar with the specific, and usually proprietary, protocol to be able to communicate with the repository. The Web Access to DICOM Persistent Objects server, also referred to as WADO, simplifies the access to any DICOM repository by providing a simple mechanism for accessing DICOM persistent objects through HTTP/HTTPS, using the DICOM Unique Identifier. The WADO standard specifies a Web-based service for accessing and presenting DICOM persistent objects, such as images and medical imaging reports. Data can be retrieved either in a presentation-ready form as specified by the requestor (e.g., JPEG or GIF) or in a native DICOM format.

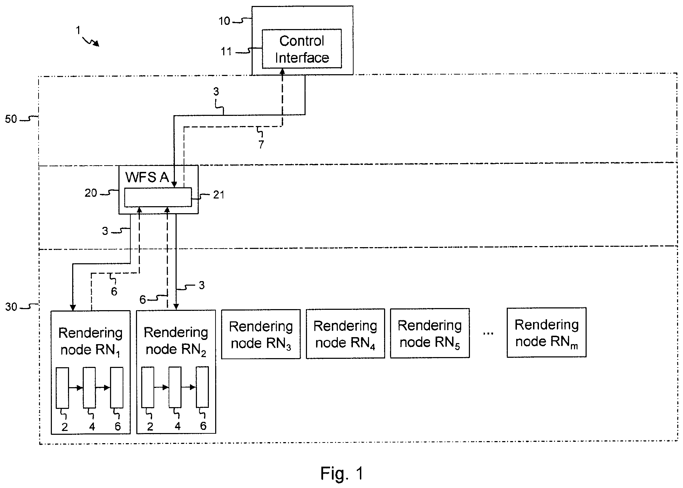

According to an embodiment shown in Fig. 1, a system 1 comprises a client 10, a network 50, and one workflow server 20 labelled workflow server A. The system 1 further comprises a plurality of rendering nodes 30 labelled RN₁, RN₂, to RNₘ, where m is an integer larger than 1. As visible in Fig. 1, the client 10 sends navigation requests 3 for navigating a sequence of rendered medical images 6 to the workflow server A through the network 50. According to an alternative embodiment, more than one client 10 send navigation requests 3 for medical images 2 to the workflow server 20 labelled A. The navigation requests 3 may for example be generated by scrolling movements of a mouse of one or more clients 10. For instance, one client 10 is scrolling with its mouse through a sequence of rendered medical images 6 along an oblique plane with a desired navigation rate. Each scrolling movement of the mouse generates navigation requests 3 for navigating the sequence of rendered medical images 6. The navigation requests 3 may also be generated when a client 10 clicks and holds its mouse in the clicked position on one rendered medical image of the sequence of rendered medical images 6, and moves its mouse in order to view the rendered medical image under a different viewing angle. Each movement of the mouse then generates navigation requests. When the respective client 10 releases the mouse, navigation requests 3 are generated in order to view the rendered medical image on which the client 10 stopped moving the mouse. Navigation requests 3 comprise for example one or more of the following request details for the sequence of rendered medical images 6: the width of each image of the sequence of rendered medical image 6; the height of each image of the sequence of rendered medical image 6; the window center of each image of the sequence of rendered medical image 6; the window width of each image of the sequence of rendered medical image 6; a request for a preview of the sequence of rendered medical image 6; the plane along which each image of the sequence of medical images 2 must be rendered; the mode for further distribution and review of the sequence of rendered medical images 6 such as Maximum Intensity Projection, also referred to as MIP, Minimum Intensity Projection, also referred to as minIP, and Average Intensity Projection, also referred to as AvglP; a mask of transparency; the physical distance in the patient under study between the center of each pixel specified by a numeric pair adjacent row spacing - adjacent column spacing in mm; an orientation row and an orientation column which comprise the direction cosines of respectively the first row and the first column with respect to the client; the x, y, z coordinates of the upper left hand corner of each image of the sequence of rendered medical images 6, i.e. the center of the first transmitted voxel, of the image in mm; the nominal thickness of the slice in mm; the format of the sequence of rendered medical image 6. As visible in Fig. 1, the workflow server 20 labelled A routes the navigation requests 3 to the rendering nodes 30 labelled RN₁ and RN₂. According to an alternative embodiment, the workflow servers 20 labelled A routes navigation requests 3 to two or more rendering nodes 30. The workflow server 20 is adapted to monitor several parameters of rendering nodes 30 to be able to select the rendering nodes 30 to which the workflow server 20 routes the navigation requests 3. The workflow server 20 is adapted to remember to which rendering nodes 30 the workflow server 20 recently routed navigation requests 3. The workflow server is also adapted to temporarily store how many navigation requests 3 the workflow server 20 routed to each of the rendering nodes 30. At the moment a workflow server 20 receives navigation requests 3 for navigating a sequence of rendered medical images 6 from a client 10, the workflow server 20 is aware of the available processing capacity of each of the rendering nodes 30 to which the workflow server 20 can route navigation requests 3. In other words, at the moment a workflow server 20 receives navigation requests 3, the workflow server 20 is aware of the processing load of each of the rendering nodes 30 to which the workflow server 20 can route navigation requests 3, i.e. how many medical images 2 each of the rendering nodes 30 is processing at this moment. When a workflow server 20 receives navigation requests 3, the workflow server 20 first compares the maximum processing capacity of each of the rendering nodes 30 to which the workflow server 20 can route navigation requests 3. The processing capacity of a rendering node 30 is related to for example the processing power of processor of the rendering node 30, the processing power, the speed of the processor, the processing rate per unit of time, etc. The maximum processing capacity is then measured when the rendering node 30 is at the maximum of all its processing capacities, and can be extrapolated to the maximum number of medical images 2 a rendering node 30 can process per second. When a workflow server 20 receives navigation requests 3, the workflow server 20 selects the rendering nodes 30 which demonstrate the highest maximum processing capacity and the highest available processing capacity, i.e. rendering nodes 30 which, at that moment when the workflow server 20 receives navigation requests 3, can process the highest number of medical images 2. The rendering nodes 30 retrieve the medical images 2 corresponding to the navigation requests 3 from a storage, for example from a PACS, and retrieve the medical images 2 corresponding to the navigation requests 3 through for example the WADO specification. According to an alternative embodiment, medical images 2 are retrieved from for example a hard disk, or a volatile memory, or any other suitable type of memory. According to a further alternative embodiment, medical images 2 can be fetched by the rendering nodes 30 through any other suitable access protocol, such as WADO, DICOM, direct access, etc. The medical images 2 are processed by the rendering nodes 30 according to the navigation request 3, and the rendering nodes 30 thereby generate a sequence of processed medical images 4. The rendering nodes 30 render the sequence of processed medical images 4 so that the sequence of processed medical images 4 can be viewed by the client 10 according to the navigation requests 3, thereby generating a sequence of rendered medical images 6. The workflow server 20 comprises a conversion module 21, which is adapted to receive, from the respective rendering nodes, the sequence of rendered medical images 6. The conversion module 21 of the workflow server 20 converts the sequence of rendered medical images 6 to a video stream 7. The conversion module 21 of the workflow server 20 then provides the corresponding clients with the video stream 7 for viewing, when the desired navigation rate exceeds a predetermined navigation rate threshold. The predetermined navigation rate threshold is determined in function of a predetermined viewing time threshold for a viewing time. The viewing time is the time period during which each of the rendered medical images of the sequence of rendered medical images 6 needs to be displayed by the client 10 in response to the navigation requests 3. For example, the viewing time can be in the order of half a second, or the viewing time can be determined by the fact that the client releases the button of a mouse to stop its navigation on an image for instance. The client 10 comprises a control interface 11 adapted to receive the video stream 7 and to display the video stream 7 for viewing. The control interface 11 comprises built-in codecs that are used to display the video stream 7 for viewing.

As visible in Fig. 1, the workflow server 20 labelled A routes navigation requests 3 to two rendering nodes 30 of the system 1 labelled RN₁ and RN₂. According to an alternative embodiment, the workflow server 20 labelled A can route navigation requests 3 to any two or more rendering nodes 30 of the system 1, labelled RN₁ to RNₘ, where m is an integer higher than 1. According to a further alternative embodiment, the workflow server 20 monitors the physical distance between the workflow server 20 and each of the rendering nodes 30 of the system 1. This way, the workflow server 20 is aware of how far each rendering node 30 is from the workflow server 20. The workflow server 20 is therefore aware of which are the rendering nodes 30 that are the closest physically to the workflow server 20. For example, the workflow server 20 can identify if the rendering nodes 30 are running on the same hardware as the workflow server 20 or if the rendering nodes are running on a several hardware machines different from the one on which the workflow server 20 runs. The workflow server 20 will preferentially route the requests 3 to the rendering nodes 30 that are physically close to him, and that meet the specifications for processing the load of requests 3 as previously described in Fig. 1.

In order to reduce the costs associated with the implementation of this CPU only processing, the use small sized rendering nodes 30 is preferred. According to an alternative embodiment as the one depicted in Fig. 1, to fully load one physical box of 30CPU and 128Gbit of RAM, the system 1 comprises one workflow server 20, with for example 2 CPUs and 16Gbit of RAM, and seven rendering nodes 30, each comprising for example 4 CPUs and 16Gbit of RAM. The system 1 is scaled to be able to hold the load at peak hours. This implies that outside the peak hours, the system 1 is underloaded. The physical resources to process the load of requests 3 are divided between small rendering nodes 30. The load of requests 3 is therefore spread amongst the rendering nodes 30.

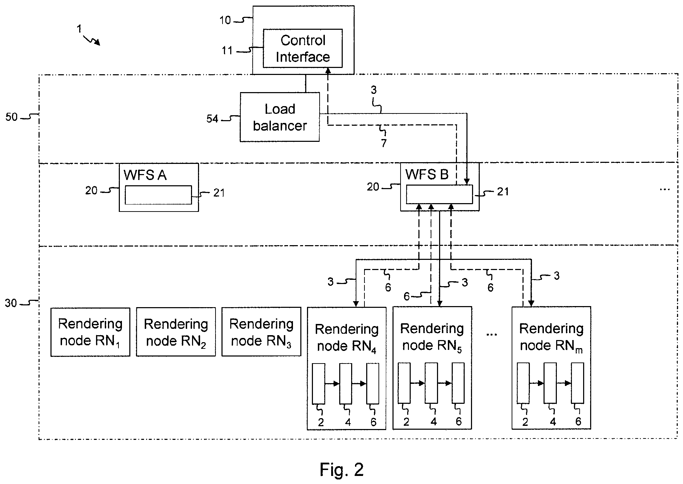

According to an embodiment shown in Fig. 2, a system 1 comprises a client 10, a network 50, and two workflow servers 20 labelled workflow server A and workflow server B. The system 1 further comprises a plurality of rendering nodes 30 labelled RN₁, RN₂, to RNₘ, where m is an integer larger than 1. The network 50 of the system 1 further comprises a load balancer 54 adapted to receive the navigation requests 3 from the client 10 and to distribute and route the navigation requests 3 of the client 10 to one of the workflow servers 20. The load balancer 54 takes the load of each workflow server 20 at the moment when the load balancer 54 receives navigation requests 3 into account to select the workflow server 20 with the lowest load, i.e. the workflow server 20 that is processing the least navigation requests 3 at this moment. According to an alternative embodiment, the load balancer 54 of the network 50 redirects the navigation requests 3 for medical images 2 from the workflow server 20 labelled A to the workflow server 20 labelled B. For example, as visible in Fig. 2, in a situation of extremely high load for the workflow server 20 labelled A, i.e. when the workflow server 20 labelled A is busy with a high load of requests 3, or in a situation of catastrophic failure of the workflow server 20 labelled A, i.e. when the workflow server 20 labelled A demonstrates a failure and crashes, or in a situation of maintenance of the workflow server 20 labelled A, i.e. when the electric power feeding the workflow server 20 labelled A has to be temporarily suspended, the load balancer 54 of the network 50 distributes the navigation requests 3 to the workflow server 20 labelled B instead of the workflow server 20 labelled A. When the workflow server 20 labelled B receives navigation requests 3 from the client 10, the workflow server 20 labelled B selects the rendering nodes 30 which demonstrate the highest maximum processing capacity and the highest available processing capacity, i.e. rendering nodes 30 which, at that moment when the workflow server 20 labelled B receives navigation requests 3, can process the highest number of medical images 2. As visible in Fig. 2, the workflow server 20 labelled B routes the navigation requests 3 to three rendering nodes 30 labelled RN₄, RN₅ and RNₘ. According to an alternative embodiment, the workflow server 20 labelled B routes navigation requests 3 to two or more rendering nodes 30. The rendering nodes 30 retrieve the medical images 2 corresponding to the navigation requests 3. The medical images 2 are processed by the rendering nodes 30 according to the navigation request 3, and the rendering nodes 30 thereby generate processed medical images 4. The rendering nodes 30 render the processed medical images 4 so that the processed medical images 4 can be viewed by the client 10 according to the navigation requests 3, thereby generating rendered medical images 6. The workflow server 20 comprises a conversion module 21, which is adapted to receive, from the respective rendering nodes, the sequence of rendered medical images 6. The conversion module 21 of the workflow server 20 converts the sequence of rendered medical images 6 to a video stream 7. The conversion module 21 of the workflow server 20 then provides the corresponding clients with the video stream 7 for viewing, when the desired navigation rate exceeds a predetermined navigation rate threshold. The predetermined navigation rate threshold is determined in function of a predetermined viewing time threshold for a viewing time. The viewing time is the time period during which each of the rendered medical images of the sequence of rendered medical images 6 needs to be displayed by the client 10 in response to the navigation requests 3. For example, the viewing time can be in the order of half a second, or the viewing time can be determined by the fact that the client releases the button of a mouse to stop its navigation on an image for instance. The client 10 comprises a control interface 11 adapted to receive the video stream 7 and to display the video stream 7 for viewing. The control interface 11 comprises built-in codecs that are used to display the video stream 7 for viewing.

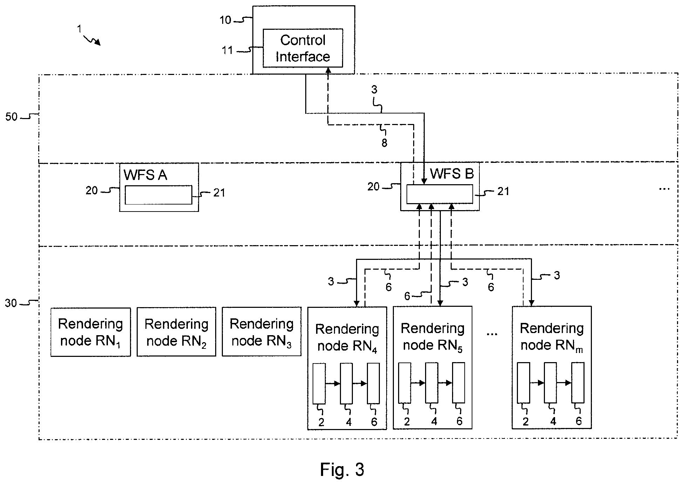

Fig. 3 shows the system 1 of Fig. 2, where the conversion module 21 of the workflow server 20 labelled A provides the respective client 10 with a subset 8 of the sequence of rendered medical images 6. Components having identical reference numbers as similar components in Fig. 2 perform the same function. A client 10 is for example scrolling with its mouse through a sequence of rendered medical images 6 along an oblique plane with a given navigation rate. Each scrolling movement of mouse generates a navigation request 3 for navigating a sequence of rendered medical images 6. The navigation requests 3 are sent to the workflow server 20 labelled A. The workflow server 20 labelled B routes the navigation requests 3 to the rendering nodes RN₄, RN₅ and RNₘ, where m is an integer higher than 1. According to an alternative embodiment, the workflow server 20 receives navigation requests 3 from one or more clients 10 and routes the navigation requests 3 to two or more rendering nodes 30. The medical images 2 are processed by the rendering nodes 30 according to the navigation request 3, and the rendering nodes 30 thereby generate a sequence of processed medical images 4. The rendering nodes 30 render the sequence of processed medical images 4 so that the sequence of processed medical images 4 can be viewed by the client 10 according to the navigation requests 3, thereby generating a sequence of rendered medical images 6. The workflow server 20 comprises a conversion module 21, which is adapted to receive, from the respective rendering nodes, the sequence of rendered medical images 6. When the desired navigation rate with which the client 10 navigates the sequence of rendered medical images 6 is below a predetermined navigation rate threshold, the conversion module 21 of the workflow server 20 provides a subset 8 of the sequence of rendered medical images 6 to the respective client 10 for viewing. The predetermined navigation rate threshold is determined in function of a predetermined viewing time threshold for a viewing time. The viewing time is the time period during which each of the rendered medical images of the sequence of rendered medical images 6 needs to be displayed by the client 10 in response to the navigation requests 3. The client 10 comprises a control interface 11 adapted to receive the subset 8 of the sequence of rendered medical images 6 and to display the subset 8 of the sequence of rendered medical images 6 for viewing. The control interface 11 comprises built-in codecs that are used to display the subset 8 of the sequence of rendered medical images 6 for viewing.

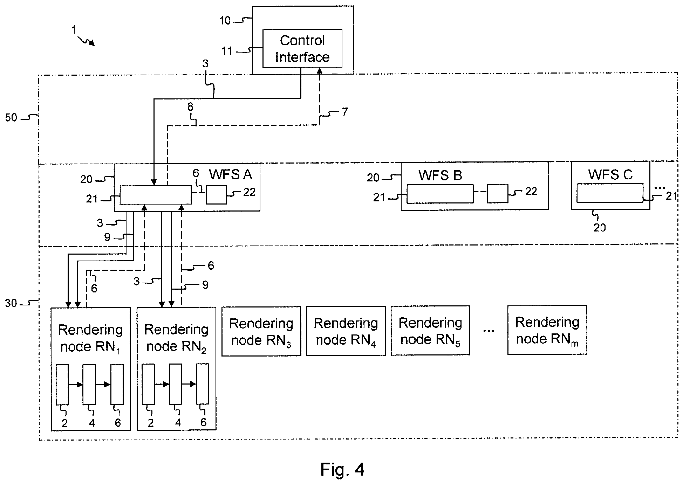

According to an embodiment shown in Fig. 4, the workflow server 20 comprises an image workflow cache 22 adapted to store the sequence of rendered medical images 6. Components having identical reference numbers as similar components in Fig. 3 perform the same function. The navigation requests 3 of a client 10 are received by the workflow server 20 labelled A. The workflow server 20 labelled A routes the navigation requests 3 to the rendering nodes RN₁ and RN₂. According to an alternative embodiment, the workflow server 20 receives navigation requests 3 from one or more clients 10 and routes the navigation requests 3 to two or more rendering nodes 30. The medical images 2 are processed by the rendering nodes 30 according to the navigation request 3, and the rendering nodes 30 thereby generate a sequence of processed medical images 4. The rendering nodes 30 provide the sequence of processed medical images 4 so that the sequence of processed medical images 4 can be viewed by the client 10 according to the navigation requests 3, thereby generating a sequence of rendered medical images 6. The conversion module 21 of the workflow server 20 A can store the sequence of rendered medical images 6 in the image workflow cache 22. The conversion module 21 is adapted to convert the sequence of rendered medical images 6 to a video stream 7. When the desired navigation rate of the client 10 is below a predetermined navigation rate threshold, the conversion module 21 is adapted to provide the client 10 with a subset 8 of rendered medical images of the sequence of rendered medical images 6 for viewing. When the desired navigation rate of the client 10 is above a predetermined navigation rate threshold, the conversion module 21 is adapted to provide the client 10 with the video stream 7 for viewing. The client 10 comprises a control interface 11 adapted to receive the video stream 7 and to display the video stream 7 for viewing. The control interface 11 comprises built-in codecs that are used to display the video stream 7 for viewing. The control interface 11 is also adapted to receive a subset 8 of the sequence of rendered medical images 6 and to display the subset 8 of the sequence of rendered medical images 6 for viewing. The control interface 11 comprises built-in codecs that are used to display the subset 8 of the sequence of rendered medical images 6 for viewing. The workflow server 20 is aware of the bandwidth of the network 50 between the clients 10 and the workflow server 20, and of a latency of the network 50, i.e. how fast the clients 10 communicate with the workflow server 20. This way, the workflow server 20 can estimate how long the sequence of rendered medical images 6 can be rendered via the network 50 to the clients 10 that sent the corresponding navigation requests 3. When the bandwidth of the network 50 decreases, the workflow server 20 stores a sequence of rendered medical images 6 and/or a video stream 7 with a lower quality format, in order to keep up with the bandwidth. The workflow server 20 stores in that case a longer sequence of rendered medical images 6 in its image workflow cache 22. When the bandwidth of the network 50 increases, the workflow server 20 stores a sequence of rendered medical images 6 with an improved format and/or a video stream 7 with an improved format. According to an alternative embodiment, as long as a client 10 navigates the sequence of rendered medical images 6, the workflow server 20 renders a sequence of rendered medical images 6 with a lower quality format. When the client 10 stops navigating the sequence of rendered medical images 6, and holds on a visible rendered medical image 6, the workflow server 20 routes navigation requests 3 for a rendered medical image 6 corresponding to the visible rendered medical image 6, and provides this particular medical image 6 in an improved format. As soon as the client 10 starts navigating the sequence of rendered medical images 6 again, the workflow server renders the sequence of rendered medical images 6 with again a low format. The workflow server 20 labelled A is adapted to estimate the next navigation requests 9 of the client 10 for future medical images 2. For example, when a client 10 stops scrolling with his mouse through the stack of images, the workflow server 20 labelled A is able to estimate future navigation requests 9 of the client 10. For example, the workflow server 20 labelled A is able to estimate the direction of scrolling of the client 10 through the sequence of rendered medical images, for example if the client 10 is going to scroll forwards or backwards in the sequence of rendered medical images 6. As visible in Fig. 4, the workflow server 20 labelled A routes the predicted, i.e. estimated, future navigation requests 9 to two or more rendering nodes 30 labelled RN₁, and RN₂. Future navigation requests 3 are treated by the rendering nodes 30 with a lower priority than the navigation requests 3, i.e. each rendering node receiving navigation requests will first process the navigation requests 3 for medical images 2 and then process future navigation requests 3. The image workflow cache of the workflow server 20 labelled A depicted in Fig. 4 can be made as big as desired, for example a few Gbit or tens of Gbit.

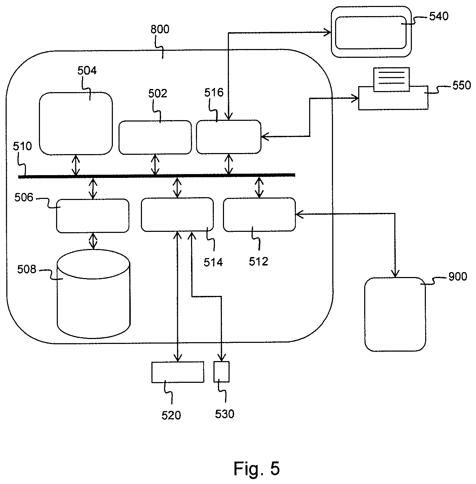

Fig. 5 shows a suitable computing system 800 for hosting the system 1 of Fig. 4. Computing system 800 may in general be formed as a suitable general purpose computer and comprise a bus 510, a processor 502, a local memory 504, one or more optional input interfaces 514, one or more optional output interfaces 516 a communication interface 512, a storage element interface 506 and one or more storage elements 508. Bus 510 may comprise one or more conductors that permit communication among the components of the computing system. Processor 502 may include any type of conventional processor or microprocessor that interprets and executes programming instructions. Local memory 504 may include a random access memory (RAM) or another type of dynamic storage device that stores information and instructions for execution by processor 502 and/or a read only memory (ROM) or another type of static storage device that stores static information and instructions for use by processor 504. Input interface 514 may comprise one or more conventional mechanisms that permit an operator to input information to the computing device 800, such as a keyboard 520, a mouse 530, a pen, voice recognition and/or biometric mechanisms, etc. Output interface 516 may comprise one or more conventional mechanisms that output information to the operator, such as a display 540, a printer 550, a speaker, etc. Communication interface 512 may comprise any transceiver-like mechanism such as for example two 1Gb Ethernet interfaces that enables computing system 800 to communicate with other devices and/or systems, for example mechanisms for communicating with one or more other computing systems 900. The communication interface 512 of computing system 800 may be connected to such another computing system by means of a local area network (LAN) or a wide area network (WAN, such as for example the internet, in which case the other computing system 580 may for example comprise a suitable web server. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example 1TB SATA disk drives, and control the reading and writing of data to and/or from these storage elements 508. Although the storage elements 508 above is described as a local disk, in general any other suitable computer-readable media such as a removable magnetic disk, optical storage media such as a CD or DVD, -ROM disk, solid state drives, flash memory cards, ... could be used.

The system 1 of Fig. 4 can be implemented as programming instructions stored it local memory 504 of the computing system 800 for execution by its processor 502. Alternatively system 1 of Fig. 4 could be stored on the storage element 508 or be accessible from another computing system 900 through the communication interface 512.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A system (1) for navigating a sequence of rendered medical images (6), said system (2) comprising:
- one or more clients (10), each client (10) comprising a control interface (11) adapted to:
- send navigation requests (3) for navigating said sequence of rendered medical images (6);
- receive and display a video stream (7) for viewing:
**characterised by** said system also comprising
- two or more rendering nodes (30), each rendering node (30) adapted to:
- process medical images (2) according to said navigation requests (3), thereby generating a sequence of processed medical images (4); and
- render said sequence of processed medical images (4) for viewing by said one or more clients (10), thereby generating a sequence of rendered medical images (6);
- said system (1) further comprises a physically separated workflow server (20) coupled to said one or more clients (10) and said two or more rendering nodes (30), adapted to route said navigation requests (3) to said two or more rendering nodes (30), said routing being based on which nodes can process the highest number of said images;
- said workflow server (20) comprises a conversion module (21) adapted to:
- in response to said routed navigation requests (3), receive from said respective rendering nodes (30) said sequence of rendered medical images (6) and storing said sequence of rendered medical images;
- convert said sequence of rendered medical images (6) to said video stream (7); and
- send said video stream (7) to the corresponding client (10) from which the workflow server received navigation requests, for viewing.

2. A system (1) according to claim 1, wherein said control interface (21) is configured to display said received video stream (7) using built-in codecs (24).

3. A system (1) according to claim 2, wherein:
- said control interface (21) of said one or more clients (10) is further configured to receive and display said sequence of rendered medical images (6); and
- said conversion module (21) is further configured to send a subset (8) of said sequence of rendered medical images (6), received in response to said routed navigation requests (3), to said respective client (10) for viewing.

4. A system (1) according to claim 3, wherein:
- said navigation requests (3) comprise a request for navigating through said sequence of rendered medical images (4) at a desired navigation rate (100); and
- said conversion module (21) is further configured to send to said respective client (10) for viewing:
- said subset (8) of said sequence of rendered medical images (6) when said desired navigation rate (100) does not exceed a predetermined navigation rate threshold (101).

5. A system (1) according to claim 4, wherein:
- said conversion module (21) is further configured to send to said respective client (10) for viewing:
- said video stream (7) when said desired navigation rate (100) exceeds said predetermined navigation rate threshold (101).

6. A system (1) according to claims 4 or 5, wherein said predetermined navigation rate threshold (101) is determined in function of a predetermined viewing time threshold (102) for a viewing time (103), said viewing time (103) being the time period during which each of the rendered medical images (6) of said sequence of rendered medical images (6) needs to be displayed by said client (10) in response to said navigation requests (3).

7. A system (1) according to any of the preceding claims, wherein said workflow server (20) comprises an image workflow cache (22) adapted to store said sequence of rendered medical images (6).

8. A system (1) according to claim 7, wherein said workflow server (20) is further adapted to:
- estimate future navigation requests (9) of said one or more clients (10);
- route said future navigation requests (9) to said two or more rendering nodes (30);
wherein each of said two or more rendering nodes (30) is further adapted to:
- process medical images (2) according to said future navigation requests (9), thereby generating a future sequence of processed medical images (4); and
- render said future sequence of processed medical images (4) for viewing by said one or more clients (10), thereby generating a future sequence of rendered medical images (6); and
wherein said conversion module (21) of said workflow server (20) is further adapted to:
- in response to said routed future navigation requests (9), receive from said respective rendering node (30) said future sequence of rendered medical images (6); and
- store said future sequence of rendered medical images (6) in said image workflow cache (22).

9. A system (1) according to claim 8, wherein said conversion module (21) is further adapted to:
- in response to said navigation requests (3), retrieve from said image workflow cache (22) said future sequence of rendered medical images (6);
- convert said future sequence of rendered medical images (6) to said video stream (7); and
- send said video stream (7) to said respective client (10) for viewing.

10. A system (1) according to claim 8, wherein said future navigation requests (9) for said future sequence of rendered medical images (6) have a lower priority for said two or more rendering nodes (30) compared to said navigation requests (3) for said sequence of rendered medical images (6).

11. A system (1) according to claim 1, wherein said workflow server (20) is further adapted to monitor one or more of the following:
- a maximum processing capacity of each of said two or more rendering nodes (30); and - an available processing capacity of each of said two or more rendering nodes (30).

12. A system (1) according to claim 11, wherein said workflow server (20) is further adapted to route said navigation requests (3) to one or more of said two or more rendering nodes (30) with highest maximum processing capacity and highest available processing capacity.

13. A method for navigating a sequence of rendered medical images (6), said method comprising the steps of:
- sending navigation requests (3) from a control interface (11) in a client (10) for navigating said sequence of rendered medical images (6);
- routing said navigation requests (3) by a physically separated workflow server (20) to two or more rendering nodes (30), said routing being based on which nodes can process the highest number of said images;
- processing medical images (2) by said two or more rendering nodes (30) according to said navigation requests (3), thereby generating a sequence of processed medical images (4);
- rendering said sequence of processed medical images (4) by said two or more rendering nodes (30) for viewing by said one or more clients (10), thereby generating said sequence of rendered medical images (6);
- in response to said routed navigation requests (3), receiving and storing at said workflow server (20) from said respective rendering nodes (30) said sequence of rendered medical images (6);
- converting said sequence of rendered medical images (6) at said workflow server (20) to a video stream (7);
- sending said video stream (7) from said workflow server (20) to said corresponding client (10) from which the workflow server received navigation requests, for viewing; and
- receiving and displaying said video stream (7) by said client (10) for viewing.

14. A computer program comprising software code adapted to perform the method according to claim 13.

15. A computer readable storage medium comprising computer-executable instructions which, when executed by a computing system, perform a method according to claim 13.

## Patentansprüche

1. Ein System (1) zur Navigation einer Sequenz wiedergegebener medizinischer Bilder (6), wobei das System (2) Folgendes umfasst:
- einen oder mehrere Kunden (10), wobei jeder Kunde (10) eine Steuerschnittstelle (11) umfasst, die so angepasst ist, dass sie:
- Navigationsanfragen (3) zur Navigation der Sequenz wiedergegebener medizinischer Bilder (6) sendet,
- einen Videostream (7) zur Betrachtung empfängt und anzeigt, **dadurch gekennzeichnet, dass** das System ferner Folgendes umfasst:
- zwei oder mehr Wiedergabeknoten (30), wobei jeder Wiedergabeknoten (30) so angepasst ist, dass er:
- medizinische Bilder (2) gemäß den Navigationsanfragen (3) verarbeitet und dabei eine Sequenz verarbeiteter medizinischer Bilder (4) erzeugt, und
- die Sequenz verarbeiteter medizinischer Bilder (4) wiedergibt, damit sie von den einen oder mehreren Kunden (10) betrachtet werden kann, und dabei eine Sequenz wiedergegebener medizinischer Bilder (6) erzeugt, und
- wobei das System (1) ferner einen mit den einen oder mehreren Kunden (10) gekoppelten, physisch getrennten Workflowserver (20) umfasst und die zwei oder mehr Wiedergabeknoten (30) so angepasst sind, dass sie die Navigationsanfragen (3) zu den zwei oder mehr Wiedergabeknoten (30) leitet, wobei das Leiten darauf beruht, welche Knoten die höchste Anzahl der besagten Bilder verarbeiten können,
- wobei der Workflowserver (20) ein Konversionsmodul (21) umfasst, dass so angepasst ist, dass es:
- im Ansprechen auf die geleiteten Navigationsanfragen (3) jeweils von den betroffenen Wiedergabeknoten (30) die Sequenz wiedergegebener medizinischer Bilder (6) empfängt und die Sequenz wiedergegebener medizinischer Bilder (6) speichert,
- die Sequenz wiedergegebener medizinischer Bilder (6) in den Videostream (7) konvertiert, und
- den Videostream (7) zur Anzeige zum betroffenen Kunden (10), von dem der Workflowserver Navigationsanfragen empfangen hat, sendet.

2. Ein System (1) nach Anspruch 1, wobei die Steuerschnittstelle (21) so konfiguriert ist, dass sie den empfangenen Videostream (7) unter Verwendung eingebauter Codecs (24) anzeigt.

3. Ein System (1) nach Anspruch 2, wobei:
- die Steuerschnittstelle (21) der einen oder mehreren Kunden (10) ferner so konfiguriert ist, dass sie die Sequenz wiedergegebener medizinischer Bilder (6) empfängt und anzeigt, und
- das Konversionsmodul (21) ferner so konfiguriert ist, dass es eine Untergruppe (8) der Sequenz wiedergegebener medizinischer Bilder (6), die im Ansprechen auf die geleiteten Navigationsanfragen (3) empfangen worden ist, zur Anzeige zum betroffenen Kunden (10) sendet.

4. Ein System (1) nach Anspruch 3, wobei:
- die Navigationsanfragen (3) eine Anfrage zur Navigation durch die Sequenz wiedergegebener medizinischer Bilder (4) bei einer erwünschten Navigationsgeschwindigkeit (100) umfassen, und
- das Konversionsmodul (21) ferner so konfiguriert ist, dass es:
- die Untergruppe (8) der Sequenz wiedergegebener medizinischer Bilder (6) dann zur Anzeige zum betroffenen Kunden (10) sendet, wenn die erwünschte Navigationsgeschwindigkeit (100) einen vorgegebenen Navigationsgeschwindigkeitsschwellwert (101) nicht übersteigt.

5. Ein System (1) nach Anspruch 4, wobei:
- das Konversionsmodul (21) ferner so konfiguriert ist, dass es:
- den Videostream (7) dann zur Anzeige zum betroffenen Kunden (10) sendet, wenn die erwünschte Navigationsgeschwindigkeit (100) den vorgegebenen Navigationsgeschwindigkeitsschwellwert (101) übersteigt.

6. Ein System (1) nach den Ansprüchen 4 oder 5, wobei der vorgegebene Navigationsgeschwindigkeitsschwellwert (101) als Funktion eines vorgegebenen Anzeigezeitschwellwertes (102) für eine Anzeigezeit (103) bestimmt wird, wobei die Anzeigezeit (103) den Zeitraum, in dem jedes der wiedergegebenen medizinischen Bilder (6) der Sequenz wiedergegebener medizinischer Bilder (6) vom Kunden (10) im Ansprechen auf die Navigationsanfragen (3) anzuzeigen ist, bedeutet.

7. Ein System (1) nach einem der vorstehenden Ansprüche, wobei der Workflowserver (20) einen Bildworkflowcache (22), der so angepasst ist, dass er die Sequenz wiedergegebener medizinischer Bilder (6) speichert, umfasst.

8. Ein System (1) nach Anspruch 7, wobei der Workflowserver (20) ferner so angepasst ist, dass er:
- künftige Navigationsanfragen (9) der einen oder mehreren Kunden (10) schätzt,
- die künftigen Navigationsanfragen (9) zu den zwei oder mehr Wiedergabeknoten (30) leitet,
wobei jeder der zwei oder mehr Wiedergabeknoten (30) ferner so angepasst ist, dass er:
- medizinische Bilder (2) gemäß den künftigen Navigationsanfragen (9) verarbeitet und dabei eine künftige Sequenz verarbeiteter medizinischer Bilder (4) erzeugt, und
- die künftige Sequenz verarbeiteter medizinischer Bilder (4) zur Anzeige von den einen oder mehreren Kunden (10) wiedergibt und dabei eine künftige Sequenz wiedergegebener medizinischer Bilder (6) erzeugt, und
wobei das Konversionsmodul (21) des Workflowservers (20) ferner so angepasst ist, dass es:
- im Ansprechen auf die geleiteten künftigen Navigationsanfragen (9) jeweils vom betroffenen Wiedergabeknoten (30) die künftige Sequenz wiedergegebener medizinischer Bilder (6) empfängt, und
- die künftige Sequenz wiedergegebener medizinischer Bilder (6) im Bildworkflowcache (22) speichert.

9. Ein System (1) nach Anspruch 8, wobei das Konversionsmodul (21) ferner so angepasst ist, dass es:
- im Ansprechen auf die Navigationsanfragen (3) die künftige Sequenz wiedergegebener medizinischer Bilder (6) vom Bildworkflowcache (22) abruft,
- die künftige Sequenz wiedergegebener medizinischer Bilder (6) in den Videostream (7) konvertiert, und
- den Videostream (7) zur Anzeige jeweils zum betroffenen Kunden (10) sendet.

10. Ein System (1) nach Anspruch 8, wobei die künftigen Navigationsanfragen (9) für die künftige Sequenz wiedergegebener medizinischer Bilder (6) eine niedrigere Priorität für die zwei oder mehr Wiedergabeknoten (30) als für die Navigationsanfragen (3) für die Sequenz wiedergegebener medizinischer Bilder (6) haben.

11. Ein System (1) nach Anspruch 1, wobei der Workflowserver (20) ferner so angepasst ist, dass er einen oder mehrere der folgenden Parameter überwacht:
- eine maximale Verarbeitungskapazität jedes der zwei oder mehr Wiedergabeknoten (30), und
- eine verfügbare Verarbeitungskapazität jedes der zwei oder mehr Wiedergabeknoten (30).

12. Ein System (1) nach Anspruch 11, wobei der Workflowserver (20) ferner so angepasst ist, dass er die Navigationsanfragen (3) zu einem oder mehreren der zwei oder mehr Wiedergabeknoten (30) mit der höchsten maximalen Verarbeitungskapazität und der höchsten verfügbaren Verarbeitungskapazität leitet.

13. Ein Verfahren zur Navigation einer Sequenz wiedergegebener medizinischer Bilder (6), wobei das Verfahren die folgenden Schritte umfasst:
- Senden von Navigationsanfragen (3) von einer Steuerschnittstelle (11) in einem Kunden (10) zur Navigation der Sequenz wiedergegebener medizinischer Bilder (6),
- Leiten der Navigationsanfragen (3) durch einen physisch getrennten Workflowserver (20) zu zwei oder mehr Wiedergabeknoten (30), wobei das Leiten darauf beruht, welche Knoten die höchste Anzahl der besagten Bilder verarbeiten können,
- Verarbeitung medizinischer Bilder (2) durch die zwei oder mehrere Wiedergabeknoten (30) gemäß den Navigationsanfragen (3), wobei eine Sequenz verarbeiteter medizinischer Bilder (4) erzeugt wird,
- Wiedergeben der Sequenz verarbeiteter medizinischer Bilder (4) durch die zwei oder mehreren Wiedergabeknoten (30) zur Anzeige von den einen oder mehreren Kunden (10), wobei die Sequenz wiedergegebener medizinischer Bilder (6) erzeugt wird,
- im Ansprechen auf die geleiteten Navigationsanfragen (3), den Empfang und das Speichern im Workflowserver (20) der jeweils von den betroffenen Wiedergabeknoten (30) wiedergegebenen Sequenz wiedergegebener medizinischer Bilder (6),
- Konvertieren der Sequenz wiedergegebener medizinischer Bilder (6) im Workflowserver (20) in einen Videostream (7),
- Senden des Videostreams (7) vom Workflowserver (20) zur Anzeige zum entsprechenden Kunden (10), von dem der Workflowserver (20) Navigationsanfragen empfangen hat, und
- Empfangen und Anzeigen des Videostreams (7) vom Kunden (10).

14. Ein Computerprogramm, umfassend einen Softwarecode, der so angepasst ist, dass er das Verfahren nach Anspruch 13 ausführt.

15. Ein computerlesbares Speichermedium, enthaltend auf einem Computer ausführbare Befehle, die, wenn sie von einem Computersystem ausgeführt werden, ein Verfahren nach Anspruch 13 ausführen.

## Revendications

1. Système (1) servant à la navigation d'une séquence d'images médicales rendues (6), ledit système (2) comprenant:
- un ou plusieurs clients (10), chaque client (10) comprenant une interface de contrôle (11) adaptée de façon à:
- envoyer des requêtes de navigation (3) permettant la navigation de la séquence d'images médicales rendues (6),
- recevoir et visualiser un flux vidéo (7) en vue de son affichage,
**caractérisé en ce que** le système comprend en outre:
- au moins deux noeuds de rendu (30), chaque noeud de rendu (30) étant adapté de façon à:
- traiter des images médicales (2) selon lesdites requêtes de navigation (3) et générer ainsi une séquence d'images médicales traitées (4), et
- rendre et visualiser la séquence d'images médicales traitées (4) auxdits un ou plusieurs clients (10) et générer ainsi une séquence d'images médicales rendues (6), et
- ledit système (1) comprenant en outre un serveur de flux de travail (20) physiquement séparé et couplé auxdits un ou plusieurs clients (10) et lesdits au moins deux noeuds de rendu (30) étant adaptés de façon à acheminer les requêtes de navigation (3) vers lesdits au moins deux noeuds de rendu (30), ledit acheminement s'effectuant en fonction des noeuds capables de traiter la plus grande quantité desdites images,
- ledit serveur de flux de travail (20) comprenant un module de conversion (21) adapté de façon à:
- recevoir la séquence d'images médicales rendues (6) en provenance des noeuds de rendu respectifs (30) en réponse aux requêtes de navigation (3) acheminées et stocker ladite séquence d'images médicales rendues (6),
- convertir la séquence d'images médicales rendues (6) en ledit flux vidéo (7), et
- envoyer et visualiser le flux vidéo (7) au client respectif (10) duquel le serveur de flux de travail a reçu des requêtes de navigation.

2. Système (1) selon la revendication 1, **caractérisé en ce que** l'interface de contrôle (21) est configurée de façon à visualiser le flux vidéo (7) reçu en utilisant des codecs (24) incorporés.

3. Système (1) selon la revendication 2, **caractérisé en ce que**:
- l'interface de contrôle (21) desdits un ou plusieurs clients (10) est en outre configurée de façon à recevoir et visualiser la séquence d'images médicales rendues (6), et
- le module de conversion (21) est en outre configuré de façon à envoyer et visualiser au client respectif (10) un sous-ensemble (8) de la séquence d'images médicales rendues (6) reçue en réponse aux requêtes de navigation (3) acheminées.

4. Système (1) selon la revendication 3, **caractérisé en ce que**:
- les requêtes de navigation (3) comprennent une requête de navigation de la séquence d'images médicales rendues (4) à une vitesse de navigation souhaitée (100), et
- le module de conversion (21) est en outre configuré de façon à:
- envoyer er visualiser le sous-ensemble (8) de la séquence d'images médicales rendues (6) au client respectif (10) lorsque la vitesse de navigation souhaitée (100) ne dépasse pas une valeur seuil de la vitesse de navigation prédéterminée (101).

5. Système (1) selon la revendication 4, **caractérisé en ce que**:
- le module de conversion (21) est en outre configuré de façon à:
- envoyer et visualiser le flux vidéo (7) au client respectif (10) lorsque la vitesse de navigation souhaitée (100) dépasse la valeur seuil de la vitesse de navigation prédéterminée (101) .

6. Système (1) selon les revendications 4 ou 5, **caractérisé en ce que** la valeur seuil de la vitesse de navigation prédéterminée (101) est déterminée en fonction d'une valeur seuil de temps de visualisation prédéterminée (102) pour une durée de visualisation (103), **caractérisé en ce que** la durée de visualisation (103) représente le laps de temps dans lequel chacune des images médicales rendues (6) de la séquence d'images médicales rendues (6) doit être visualisée par le client (10) en réponse auxdites requêtes de navigation (3).

7. Système (1) selon l'une quelconque des revendications précédentes, **caractérisé en ce que** le serveur de flux de travail (20) comprend un cache de flux de travail d'images (22) adapté de façon à stocker la séquence d'images médicales rendues (6).

8. Système (1) selon la revendication 7, **caractérisé en ce que** le serveur de flux de travail (20) est en outre adapté de façon à:
- estimer des requêtes de navigation futures (9) desdits un ou plusieurs clients (10),
- acheminer les requêtes de navigation futures (9) auxdits au moins deux noeuds de rendu (30),
**caractérisé en ce que** chacun desdits au moins deux noeuds de rendu (30) est en outre adapté de façon à:
- traiter des images médicales (2) selon les requêtes de navigation futures (9) et générer ainsi une séquence future d'images médicales traitées (4), et
- rendre la séquence future d'images médicales traitées (4) afin de la visualiser auxdits un ou plusieurs clients (10) et générer ainsi une séquence future d'images médicales rendues (6), et
**caractérisé en ce que** le module de conversion (21) du serveur de flux de travail (20) est en outre adapté de façon à:
- recevoir, en réponse auxdites requêtes de navigation futures (9) acheminées, la séquence future d'images médicales rendues (6) en provenance du noeud de rendu (30) respectif, et
- stocker la séquence future d'images médicales rendues (6) dans le cache de flux de travail d'images (22).

9. Système (1) selon la revendication 8, **caractérisé en ce que** le module de conversion (21) est en outre adapté de façon à:
- récupérer, en réponse auxdites requêtes de navigation (3), la séquence future d'images médicales rendues (6) du cache de flux de travail d'images (22),
- convertir la séquence future d'images médicales rendues (6) en ledit flux vidéo (7), et
- envoyer et visualiser le flux vidéo (7) au client respectif (10) .

10. Système (1) selon la revendication 8, **caractérisé en ce que** les requêtes de navigation futures (9) pour la séquence future d'images médicales rendues (6) ont une priorité pour lesdits au moins deux noeuds de rendu (30) qui est plus basse que pour les requêtes de navigation (3) pour la séquence d'images médicales rendues (6).

11. Système (1) selon la revendication 1, **caractérisé en ce que** le serveur de flux de travail (20) est en outre adapté de façon à surveiller un ou plusieurs des paramètres ci-après:
- une capacité de traitement maximale de chacun desdits au moins deux noeuds de rendu (30), et
- une capacité de traitement disponible de chacun desdits au moins deux noeuds de rendu (30).

12. Système (1) selon la revendication 11, **caractérisé en ce que** le serveur de flux de travail (20) est en outre adapté de façon à acheminer les requêtes de navigation (3) à un ou plusieurs desdits au moins deux noeuds de rendu (30) ayant la capacité de traitement maximale la plus élevée et la capacité de traitement disponible la plus élevée.

13. Procédé de navigation d'une séquence d'images médicales rendues (6), **caractérisé en ce que** le procédé comprend les étapes consistant à:
- envoyer des requêtes de navigation (3) d'une interface de contrôle (11) dans un client (10) permettant la navigation de la séquence d'images médicales rendues (6),
- acheminer les requêtes de navigation (3), au moyen d'un serveur de flux de travail (20) physiquement séparé, auxdits au moins deux noeuds de rendu (30), ledit acheminement s'effectuant en fonction des noeuds capables de traiter la plus grande quantité desdites images,
- traiter des images médicales (2) au moyen desdits au moins deux noeuds de rendu (30) selon lesdites requêtes de navigation (3) et générer ainsi une séquence d'images médicales traitées (4),
- rendre la séquence d'images médicales traitées (4) au moyen desdits au moins deux noeuds de rendu (30) afin de la visualiser auxdits un ou plusieurs clients (10) et générer ainsi la séquence d'images médicales rendues (6),
- en réponse auxdites requêtes de navigation (3) acheminées, recevoir et stocker dans le serveur de flux de travail (20) la séquence d'images médicales rendues (6) en provenance des noeuds de rendu (30) respectifs,
- convertir la séquence d'images médicales rendues (6) dans le serveur de flux de travail (20) en un flux vidéo (7),
- envoyer et visualiser le flux vidéo (7) du serveur de flux de travail (20) au client correspondant (10) duquel le serveur de flux de travail (20) a reçu des requêtes de navigation, et
- recevoir et visualiser le flux vidéo (7) par ledit client (10).

14. Programme informatique comprenant un code logiciel adapté de façon à mettre en oeuvre le procédé selon la revendication 13.

15. Support de stockage lisible par ordinateur comprenant des instructions exécutables sur ordinateur qui, lorsqu'elles sont exécutées sur un système informatique, assurent la mise en oeuvre d'un procédé selon la revendication 13.
